# FASCICULE DE BREVET EUROPEEN

(11) **EP 2 780 725 B1**
(45) Date de publication et mention de la délivrance du brevet: **07.10.2015**
(21) Numéro de dépôt: 12816085.0
(22) Date de dépôt: 16.11.2012
(51) Int. Cl.: G01P 15/06, B65D 79/02

(54) **INDICATEUR DE CHOC, PERFORANT ET A USAGE UNIQUE, POUR LE TRANSPORT DE PRODUITS FRAGILES**
PERFORIERENDER EINWEG-AUFPRALLINDIKATOR ZUM TRANSPORT VON ZERBRECHLICHEN PRODUKTEN
PERFORATING SINGLE-USE IMPACT INDICATOR, FOR THE TRANSPORTATION OF FRAGILE PRODUCTS

(30) Priorité: 18.11.2011 FR 1103527
(43) Date de publication de la demande: 24.09.2014
(73) Titulaire: Schonberg, Ronan, 69240 Bourg-de-Thizy (FR)
(72) Inventeur: Schonberg, Ronan, 69240 Bourg-de-Thizy (FR)
(74) Mandataire: Oudin, Stéphane
(86) Numéro de dépôt international: PCT/FR2012/000463
(87) Numéro de publication internationale: WO 2013/072581

(56) Documents cités:
- DE-A1-102005 021 914
- US-A1- 2008 099 479
- US-B1- 6 367 408

## Description

Quels que soient les efforts entrepris par les industries de l'emballage et du transport pour garantir l'intégrité des matériels conditionnés et transportés, la dégradation des matériels lors des livraisons n'a cessé d'être un problème pour les professionnels, tant au plan économique qu'à celui de l'organisation des services après-ventes.

En effet, un matériel qui quitte le service expédition d'une entreprise en parfait état de fonctionnement et après plusieurs contrôles, peut être réceptionné par le destinataire dans un état dégradé et non fonctionnel.

Les principaux intervenants dans la chaîne de livraison sont généralement assurés pour ce genre de situation mais encore faut-il déterminer la responsabilité de chacun d'entre eux soit : l'expéditeur, le transporteur et le destinataire.

Cette recherche de la vérité est souvent rendue difficile par le fait que le destinataire qui est le plus souvent le consommateur utilisateur, réceptionne son colis sans l'ouvrir. Cette attitude ne peux lui être reprochée quand on sait que certains matériels et équipements sont conditionnés dans des emballages multiples et sophistiqués parfois difficiles à ouvrir et que les livreurs sont le plus souvent soumis à des calendriers très tendus ne leur permettant pas d'attendre le contrôle complet du destinataire.
C'est donc après que le livreur ait quitté le lieu de destination que les constats sont réalisés et les dégâts relevés mais évidemment sans la présence du livreur qui est présumé responsable desdits dégâts.

Conscient de cet inconvénient, l'inventeur de la présente invention a recherché une solution technique qui permettrait au réceptionnaire de constater de visu que le colis dont il prend livraison a été maltraité et a subi au moins un choc suffisant pour compromettre l'aspect ou le fonctionnement du matériel contenu.

Ainsi, la constatation de la maltraitance du colis pendant le transport pourrait être réalisée en présence du livreur et avalisée par lui-même par émargement du Bon de livraison.

Dans la recherche de la solution, l'inventeur a souhaité que l'indicateur de choc soit donc visuel mais à usage unique, c'est-à-dire non réutilisable. Lorsqu'un choc a été subi par le colis, l'indicateur de choc ne peut en aucun cas reprendre son état initial par une quelconque manipulation qui pourrait annihiler son effet.

Il a également recherché un moyen de rendre l'indicateur de choc inamovible une fois que celui-ci ait été apposé sur le colis, afin d'éviter que le livreur constatant l'activation de l'indicateur puisse le remplacer par un autre indicateur non activé.

Pour simplifier au maximum le recours à cette solution technique, l'inventeur a cherché à concevoir un indicateur de choc facile d'usage et donc à la portée de tous, économique et efficace quel que soit son positionnement sur le colis.

La plupart des indicateurs de choc existants aujourd'hui dans le commerce ne présentent pas une telle association de caractéristiques favorables et sont fondés sur des principes de fonctionnement très éloignés de celui de l'invention du présent brevet.

Ainsi, le brevet le plus souvent repris en matière de signalisation de chocs sur les colis est un brevet américain émis le 5 janvier 1988 et portant le numéro d'enregistrement 32,570 qui sera désigné ci-après par le nom de son inventeur Worth. R.CONN tel que Brevet CONN.
Ce brevet, est plutôt à considérer comme un indicateur de changement de position du colis que comme un indicateur de choc. Il est plutôt destiné à des colis devant être transportés dans une position bien déterminée. Certes, le plus souvent les chocs sont associés à des changements de position du colis, mais un colis peut être endommagé sérieusement sans changement de sa position. Par exemple un colis posé dans une certaine position peut recevoir verticalement sur sa face supérieure un poids lourds susceptible de détériorer son contenu sans pour autant avoir changé sa position. Cela peut être par exemple le cas d'un colis tombant du haut d'une palette sur un colis placé plus bas sur ladite palette. Dans un tel cas, le brevet CONN ne pourrait être efficace et détecter le choc subi.

Le brevet CONN qui n'étant plus actif ne peut être opposé à la présente invention qu'au titre de l'état de la technique, présente la caractéristique d'un fonctionnement fondé sur la différence de densité de deux liquides.
Ainsi, un des deux liquides de moindre densité que l'autre est maintenu par différence de gravité dans un logement spécialement conçu pour le recevoir. Lors d'un choc violent mais plutôt lors d'un renversement du colis, le liquide de faible densité quitte son logement initial pour aller se positionner ailleurs et ainsi provoque un changement visuel au lieu et place du logement qui le recevait.

Si ce concept permet par une simple visualisation de constater que le colis a été maltraité, il n'est nullement à usage unique. En effet, en supposant que le détecteur de choc du brevet CONN ait été apposé sur une ou des parois latérales du colis protégé et que ledit colis ait subi un choc ou un changement de position suffisamment important pout provoquer la détection, il reste possible au livreur de manipuler le colis de manière à ce que la masse qui s'est échappée de son réceptacle rejoigne celui-ci. De plus, le produit issu du brevet CONN étant simplement apposé par adhésif sur une ou plusieurs faces du colis, il reste réutilisable, ce qui ne peut être le cas du produit de l'invention du présent brevet.

Le brevet CONN présente également l'inconvénient de ne pouvoir être apposé que sur les faces verticales du colis, contrairement à l'invention du présent brevet. En effet, apposé sur une face horizontale du colis comme par exemple le plan horizontal supérieur, il verrait son fonctionnement totalement annihilé, l'effet de différence de densité et donc de gravité des deux liquides contenus devenant de fait inopérant.

D'autres procédés existants présentent des similitudes dans l'objectif mais aucune dans le moyen de l'atteindre. La plupart des procédés existants recourent au déplacement mécanique d'une masse à l'intérieur d'un volume, par exemple le brevet anglais THOMAS n° WO 0037889 du 29/06/2000 ou le brevet SHOCKWATCH n° WO 2008/085696 du 17/07/2008, aujourd'hui mis en oeuvre et dont il est possible de trouver les produits dans le commerce sous diverses formes.

Le procédé issu de ce dernier brevet SHOCKWATCH est également fondé sur la libération lors d'un choc violent ou un changement de position du colis, d'une masse maintenue prisonnière d'un logement au moyen d'une pièce mobile, à l'intérieur d'un volume contenant.
Ainsi, lors du choc ou du changement de position du colis équipé, la pièce mobile maintenant la masse dans son logement, se déplace et libère la masse qui disparaît dans le volume du contenant. Ce déplacement conduit à une visibilité différente de la zone initiale et indique le choc ou le mouvement.

Beaucoup de procédés d'indication de choc ou de mouvement ont été imaginés pour d'autres applications différentes de celle de la présente invention, en recourant à l'électricité ou l'électronique. On peut citer par exemple le brevet US ZADESKI n° 2011/0100124 du 05/05/2011 totalement fondé sur le déplacement d'une masse métallique établissant un contact électrique lors des chocs et déplacements de l'objet protégé.

Tous ces procédés aujourd'hui existants ne peuvent être opposés à l'invention du présent brevet dont le fonctionnement est fondé sur le mélange ou le déplacement de plusieurs volumes liquides à l'intérieur d'un contenant, ce mélange ou déplacement agissant sur un élément sensible changeant d'aspect définitivement.

La présente invention a pour but de signaler visuellement qu'un colis qui peut apparaître comme en bon état a subi au cours de son transport un ou des chocs violents susceptibles d'altérer l'aspect ou le fonctionnement de son contenu.

La présente invention concerne un indicateur de choc composé de trois éléments indépendants et coopérant entre eux :
a) Un contenant étanche perforant.
b) Un élément sensible.
c) Un contenu constitué d'un ou plusieurs composants.

Selon le mode de réalisation préféré de l'invention, le contenant étanche perforant est fabriqué dans un matériau compatible avec son utilisation et préférablement solide tel que par exemple matière plastique, métal ou autre matériau rigide du commerce. Il peut être également réalisé dans un matériau biodégradable qui facilitera son élimination. Il est constitué en une ou plusieurs pièces, et de préférence de forme cylindrique. L'une de ses deux extrémités est fermée hermétiquement et de forme conique, pour permettre l'introduction par perforation de la surface à laquelle le contenant est appliqué, le plus souvent du carton d'emballage simple ou double cannelure constituant un colis.

Selon le mode de réalisation préféré de l'invention, le contenant étanche perforant dispose sur son extrémité opposée à l'extrémité conique étanche, d'un accès direct à son volume intérieur, de diamètre préférablement équivalent au diamètre intérieur du contenant, pour permettre l'introduction dans ce volume du contenu constitué de composants rapportés.

Selon le mode de réalisation préféré de l'invention, l'extrémité opposée à l'extrémité conique étanche du contenant étanche perforant est munie d'une collerette périphérique préférablement cylindrique et plate, de faible épaisseur et de diamètre suffisamment supérieur au diamètre extérieur du contenant pour permettre l'appui du plan inférieur de ladite collerette sur la surface extérieur du colis, lors de l'introduction du contenant par perforation.

Selon le mode de réalisation préféré de l'invention, la collerette d'appui du contenant étanche perforant est conçue de telle manière qu'elle peut recevoir par introduction dans son épaisseur ou par application sur son épaisseur, un élément sensible de préférence cylindrique et de diamètre supérieur au diamètre extérieur du contenant étanche perforant, le plus souvent constitué par une pastille de faible épaisseur.

Selon le mode de réalisation préféré de l'invention, le volume intérieur du contenant étanche perforant se trouve obturé par le positionnement de l'élément sensible dans ou sur l'épaisseur de la collerette.
Ainsi obturé, après introduction dans le volume intérieur du ou des composants du contenu, l'élément sensible est directement accessible au contact direct avec le contenu du contenant étanche perforant.

Selon le mode de réalisation préféré de l'invention, le plan supérieur de la collerette muni de l'élément sensible est protégé de toute influence ou dégradation extérieure par une protection rapportée le plus souvent constituée ou intégrant un film en matière plastique transparent ou translucide, permettant l'accès visuel à l'élément sensible.

Selon le mode de réalisation préféré de l'invention, le contenant étanche perforant dispose de préférence sur l'une ou l'autre des surfaces constituées par le plan inférieur de la collerette et le plan périphérique extérieur du contenant, d'un aménagement spécial interdisant le retrait de l'indicateur de choc, sans dégradation du colis sur lequel il a été appliqué par perforation.

Par exemple, la surface périphérique extérieure du contenant peut disposer de manière intégrée ou rapportée, d'un ou plusieurs ergots anti-retour capables de pénétrer le plan de réception du colis lors de la mise en place par perforation sous pression verticale et incapables de s'extraire du colis sans dégradation visuellement constatable.

Par un autre exemple, la surface périphérique extérieure du contenant peut disposer de manière intégrée ou rapportée, d'une rampe hélicoïdale préférablement sur une partie de sa hauteur, de manière à imposer à l'indicateur de choc un mouvement de rotation lors de l'introduction par pression verticale, mouvement qui impliquerait l'application d'un mouvement contraire pour extraite l'indicateur de choc, mouvement contraire impossible à appliquer par la forme même de la collerette.

Selon le mode de réalisation préféré de l'invention, l'élément sensible est fabriqué dans un matériau compatible avec sa fonction et notamment dans un matériau dont l'aspect se modifie sensiblement sous l'effet d'un contact direct avec un des composants, qu'il soit liquide, solide ou gazeux ou sous l'effet indirect de la conséquence du déplacement ou du mélange des composants entre eux.
Par exemple, l'élément sensible de l'invention est réalisé dans un matériau absorbant dont l'aspect, forme ou couleur, change automatiquement au contact d'un composant humide.
Par un autre exemple, l'élément sensible de l'invention est constitué d'un matériau dont l'aspect, forme ou couleur, se modifie automatiquement sous l'effet d'une élévation de température ou au contact d'un gaz généré par la mise en contact d'au moins deux composants.

Selon le mode de réalisation préféré de l'invention, le contenu de l'indicateur de choc perforant est introduit dans le contenant étanche perforant préalablement à l'apposition de l'élément sensible de l'invention et l'application de sa protection extérieure.

Selon le mode de réalisation préféré de l'invention, le contenu de l'indicateur de choc perforant est composé principalement de deux solutions dont une est préférablement constituée d'eau et d'additifs divers tels que pigments et conservateurs et l'autre préférablement constituée d'un corps gras à l'état liquide, tel que par exemple de l'huile.

Selon le mode de réalisation préféré de l'invention, lors de l'introduction par exemple par gravité et par l'accès supérieur du contenant étanche perforant, des composants constituant le contenu de l'indicateur de choc perforant de l'invention, les composants se placent automatiquement et en accord avec leur densité respective de telle manière que le composant constitué d'eau occupe la partie basse du contenant soit la partie pointue de celui-ci et le composant constitué par exemple d'huile, occupe la partie haute du contenant soit la zone séparant le composant constitué d'eau de l'élément sensible de l'invention.
Ainsi, le composant constitué d'huile fait effet de barrière interdisant tout contact entre d'une part le composant constitué d'eau et d'autre part l'élément sensible de l'invention.

Selon le mode de réalisation préféré de l'invention, le fonctionnement de l'indicateur de choc est fondé sur la différence de densité et de viscosité des composants du contenu, qui conditionne leur déplacement respectif à l'intérieur du contenant étanche perforant. Ainsi, en cas de choc appliqué sur le colis muni de l'indicateur de choc de l'invention, la brusque décélération provoquée par l'impact, bouleverse la stabilité des deux composants et le composant constitué d'eau entre en contact direct partiel ou total avec l'élément sensible. Mis en contact avec le composant humide, l'élément sensible change définitivement d'aspect indiquant visuellement le choc subi.

Selon le mode de réalisation préféré de l'invention, le diamètre intérieur du contenant étanche perforant, son état de surface et notamment sa rugosité sont déterminés en relation étroite avec le volume exact et la composition précise de chacun des composants. En effet, ce sont ces éléments qui déterminent avec précision le réglage de l'indicateur selon les résultats souhaités.
Ainsi, la coordination de ces divers éléments associés conduit à interdire le fonctionnement de l'indicateur de choc pour des chocs de faible intensité souvent provoqués lors des manipulations habituelles d'un colis et l'autoriser pour des chocs plus violents susceptibles de conduire à la dégradation du matériel emballé.
Par exemple, le rapport de volumes entre les deux composants conditionne l'efficacité de l'indicateur. En effet, plus le volume du composant constitué de corps gras est important, moins l'indicateur de choc est sensible. Cela se justifie par l'accroissement de l'épaisseur du composant gras et donc de la barrière opposée au déplacement du composant constitué d'eau.

Selon un mode de réalisation différent de l'invention, le contenant étanche perforant reçoit par exemple trois composants dont l'un est constitué d'eau additionnée d'additifs divers, le deuxième est constitué d'un corps gras tel que de l'huile et le troisième est constitué d'un composant chimique en granulés ou poudre, précisément dosé pour réagir par effet exothermique compatible avec la préservation du contenu, au contact avec l'humidité. (par exemple l'Oxyde de calcium).
L'élément sensible de l'invention est lui-même constitué d'un papier thermique dont l'aspect extérieur se modifie sous l'effet d'une élévation de température. On connaît un tel papier utilisé par exemple dans l'appareil de transmission fax.

Dans ce mode de réalisation de l'invention, par leur densité respective, les composants sont maintenus dans le contenant étanche perforant selon l'ordre suivant :
- Le composant constitué d'eau est placé au plus bas et vers la pointe du contenant,
- Le composant constitué d'un corps gras est placé au-dessus du composant humide.
- Le composant chimique a effet exothermique est placé au-dessus du composant constitué de corps gras.
Ainsi, le composant constitué de corps gras fait office de barrière entre le composant humide et le composant chimique à effet exothermique.
Lors d'un choc appliqué au colis équipé de l'indicateur de choc de l'invention, la brusque décélération provoquée par l'impact, bouleverse la stabilité des trois composants et le composant constitué d'eau entre en contact direct partiel ou total avec le composant chimique situé sous l'élément sensible de l'invention. Mis en contact avec le composant humide, le composant chimique génère une légère augmentation de la température à l'intérieur du contenant étanche perforant, entraînant le changement d'aspect immédiat et définitif de l'élément sensible.
Comme dans le mode de réalisation précédent de l'invention, le diamètre intérieur du contenant étanche perforant, son état de surface et notamment sa rugosité sont déterminés en relation étroite avec le volume exact et la composition précise de chacun des composants. En effet, ce sont ces éléments qui déterminent avec précision le réglage de l'indicateur selon les résultats espérés.

Selon le mode de réalisation préféré de l'invention, le fonctionnement de l'indicateur de choc objet du présent brevet est fondamentalement basé sur le déplacement et le mélange de plusieurs composants associés à l'intérieur du contenant étanche perforant, ce déplacement ou ce mélange générant la transformation d'aspect d'un élément sensible.
De nombreuses applications peuvent être conçues à partir de la présente invention dans le respect de cette définition.

La description suivante en regard des dessins annexés à titre d'exemples non limitatifs, permettra de comprendre comment l'invention peut être mise en pratique.
La figure 1 est une vue en perspective de l'indicateur de l'invention, prêt à être appliqué sur un colis par perforation de celui-ci.
La figure 2 est une vue éclatée en coupe longitudinale de l'indicateur de choc de l'invention vide de son contenu.
La figure 3 est une vue de l'indicateur de choc de l'invention muni d'ergots anti-retour.
La figure 4 est une vue de l'indicateur de choc de l'invention muni d'une rampe hélicoïdale.
La figure 5 est une vue en coupe de l'indicateur de choc de l'invention avec son contenu et prêt à être utilisé.
La figure 6 montre en vue de dessus l'élément sensible de l'indicateur de choc de l'invention dans les trois états de son fonctionnement.
La figure 7 montre respectivement trois dosages différents de composants constituant le contenu et générant trois conditions d'application différentes.
La figure 8 est une vue en coupe de l'indicateur de choc de l'invention constitué pour un fonctionnement par réaction exothermique recourant à trois composants.
La figure 9 est la représentation d'un colis muni de l'indicateur de choc de l'invention

Selon le mode de réalisation préféré de l'invention, l'indicateur de choc de la présente invention est composé de trois éléments indépendants et coopérant entre eux :
d) Un contenant étanche perforant (CT)
e) Un élément sensible (ES)
f) Un contenu (CU) constitué d'un ou plusieurs composants

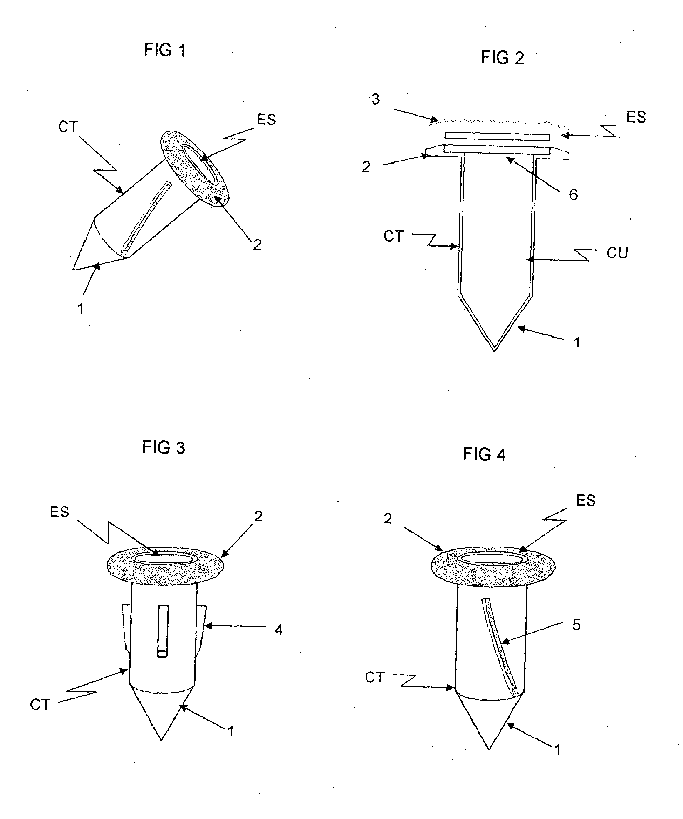

Selon le mode de réalisation préféré de l'invention, le contenant étanche perforant (CT) est fabriqué dans un matériau compatible avec son utilisation. Il est constitué en une ou plusieurs pièces, et de préférence de forme cylindrique. L'une de ses deux extrémités est fermée hermétiquement et de forme conique (1), pour permettre l'introduction par perforation de la surface à laquelle l'indicateur de choc de l'invention est appliqué, le plus souvent du carton d'emballage simple ou double cannelure constituant un colis. (Voir FIG 1)

Selon le mode de réalisation préféré de l'invention, le contenant étanche perforant (CT) dispose sur son extrémité opposée à l'extrémité conique étanche (1), d'un accès direct à son volume intérieur (6) de diamètre préférablement équivalent au diamètre intérieur du contenant (CT), pour permettre l'introduction dans ce volume des composants rapportés constituant le contenu (CU). (Voir FIG 2).

Selon le mode de réalisation préféré de l'invention, l'extrémité opposée à l'extrémité conique étanche(1) du contenant étanche perforant (CT) est munie d'une collerette périphérique préférablement cylindrique et plate (2), de faible épaisseur et de diamètre suffisamment supérieur au diamètre extérieur du contenant (CT) pour permettre l'appui du plan inférieur de ladite collerette (2) sur la surface extérieur du colis, lors de l'introduction du contenant (CT) par perforation. (Voir FIG 1).

Selon le mode de réalisation préféré de l'invention, la collerette d'appui (2) du contenant étanche perforant (CT) est conçue de telle manière qu'elle peut recevoir par introduction dans son épaisseur ou par application sur son épaisseur, un élément sensible (ES) de préférence cylindrique et de diamètre supérieur au diamètre extérieur du contenant étanche perforant (CT), le plus souvent constitué par une pastille de faible épaisseur. (Voir FIG 2).

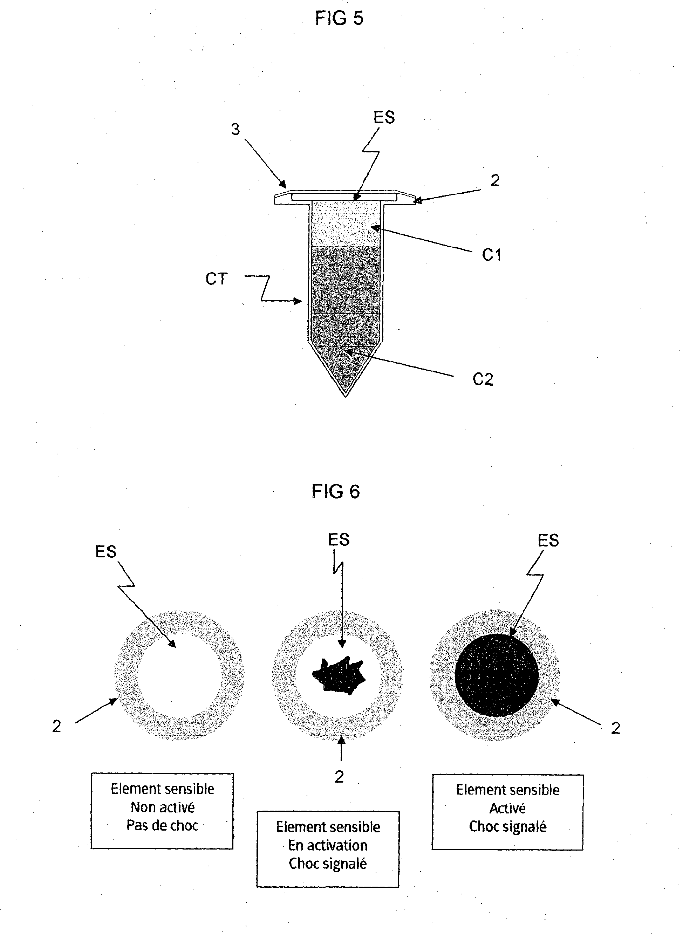

Selon le mode de réalisation préféré de l'invention, le volume intérieur du contenant étanche perforant (CT) se trouve obturé par le positionnement de l'élément sensible (ES) dans ou sur l'épaisseur de la collerette (2).
Ainsi obturé, après introduction dans le volume intérieur par l'accès (6) du ou des composants du contenu (CU), l'élément sensible (ES) est directement accessible au contact direct avec le contenu (CU) du contenant étanche perforant (CT). (Voir FIG 5)

Selon le mode de réalisation préféré de l'invention, le plan supérieur de la collerette (2) muni de l'élément sensible (ES) est protégé de toute influence ou dégradation extérieure par une protection rapportée (3) transparente ou translucide, le plus souvent constituée ou intégrant un film en matière plastique transparent ou translucide, permettant l'accès visuel à l'élément sensible (ES). (Voir FIG 2).

Selon le mode de réalisation préféré de l'invention, le contenant étanche perforant (CT) dispose de préférence sur l'une ou l'autre ou sur les deux surfaces constituées par le plan inférieur de la collerette (2) et le plan périphérique extérieur du contenant (CT), d'un aménagement spécial interdisant le retrait de l'indicateur de choc, sans dégradation du colis sur lequel il a été appliqué par perforation. (Voir FIG 3 et 4).
Par exemple, la surface périphérique extérieure du contenant (CT) peut disposer de manière intégrée ou rapportée, d'un ou plusieurs ergots anti-retour (4) capables de pénétrer dans le plan de réception du colis sous l'effet d'une pression verticale et incapables de s'extraire dudit colis sans dégradation visuellement constatable. (Voir Fig 3).

Par un autre exemple, la surface périphérique extérieure du contenant (CT) peut disposer de manière intégrée ou rapportée, d'une rampe hélicoïdale (5) préférablement sur une partie de sa hauteur, de manière à imposer à l'indicateur de choc de l'invention un mouvement de rotation lors de l'introduction par pression verticale, mouvement qui impliquerait l'application d'un mouvement contraire pour extraire l'indicateur de choc, mouvement contraire rendu impossible à appliquer par la forme même de la collerette (2). (Voir FIG4).

Selon le mode de réalisation préféré de l'invention, l'élément sensible (ES) est fabriqué dans un matériau compatible avec sa fonction et notamment dans un matériau dont l'aspect se modifie sensiblement sous l'effet d'un contact direct avec un des composants, qu'il soit liquide, solide ou gazeux ou sous l'effet indirect de la conséquence du déplacement ou du mélange des composants entre eux.
Par exemple, l'élément sensible (ES) de l'invention est réalisé dans un matériau absorbant dont l'aspect, forme ou couleur, change automatiquement au contact d'un composant humide. (Voir FIG 6).

Par un autre exemple, l'élément sensible (ES) de l'invention est constitué d'un matériau dont l'aspect, forme ou couleur, se modifie automatiquement sous l'effet d'une élévation de température ou au contact d'un gaz généré par la mise en contact de deux composants. (Voir FIG 6).

Selon le mode de réalisation préféré de l'invention, le contenu (CU) de l'indicateur de choc perforant est introduit dans le contenant étanche (CT) par l'accès (6) et préalablement à l'apposition de l'élément sensible (ES) de l'invention et l'application de sa protection extérieure (3). (Voir FIG 2).

Selon le mode de réalisation préféré de l'invention, le contenu (CU) de l'indicateur de choc perforant est composé principalement de deux solutions (C1 et C2) dont une est préférablement constituée d'eau et d'additifs divers tels que pigments et conservateurs (C2) et l'autre préférablement constituée d'un corps gras à l'état liquide, tel que par exemple de l'huile (C1). (Voir FIG 5).

Selon le mode de réalisation préféré de l'invention, lors de l'introduction par exemple par gravité et par l'accès supérieur (6) du contenant étanche perforant (CT), des composants constituant le contenu (CU) de l'indicateur de choc perforant de l'invention, les composants (C1) et (C2) se placent automatiquement et en accord avec leur densité respective de telle manière que le composant constitué d'eau (C2) occupe la partie basse du contenant (CT) soit la partie pointue de celui-ci et le composant constitué par exemple d'huile (C1), occupe la partie haute du contenant (CT) soit la zone séparant le composant constitué d'eau (C2) de l'élément sensible (ES) de l'invention.
Ainsi, le composant constitué d'huile (C1) fait effet de barrière interdisant tout contact entre d'une part le composant (C2) constitué d'eau et l'élément sensible (ES) de l'invention. (Voir FIG 5).

Selon le mode de réalisation préféré de l'invention, le fonctionnement de l'indicateur de choc est fondé sur la différence de densité et de viscosité des composants (C1 et C2) du contenu (CU), qui conditionne leur déplacement respectif à l'intérieur du contenant étanche perforant (CT).
Ainsi, en cas de choc appliqué sur le colis muni de l'indicateur de choc de l'invention, la brusque décélération provoquée par l'impact, bouleverse la stabilité des deux composants (C1 et C2) et le composant constitué d'eau (C2) entre en contact direct partiel ou total avec l'élément sensible (ES). Mis en contact avec le composant humide, l'élément sensible (ES) change définitivement d'aspect indiquant visuellement le choc subi. (Voir FIG 6).

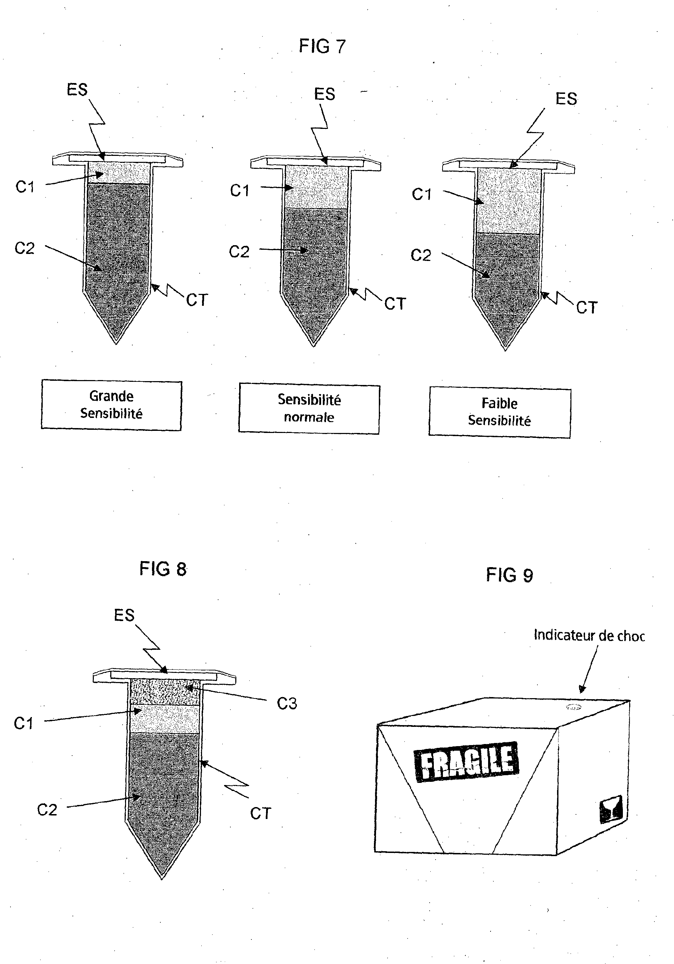

Selon le mode de réalisation préféré de l'invention, le diamètre intérieur du contenant étanche perforant (CT), son état de surface et notamment sa rugosité sont déterminés en relation étroite avec le volume exact et la composition précise de chacun des composants (C1 et C2). En effet, ce sont ces éléments qui déterminent avec précision le réglage de l'indicateur selon les résultats espérés.
Ainsi, la coordination de ces divers éléments associés conduit à interdire le fonctionnement de l'indicateur de choc en position inversée ou pour des chocs de faible intensité souvent provoqués lors des manipulations habituelles d'un colis et l'autoriser pour des chocs plus violents susceptibles de conduire à la dégradation du matériel emballé.
Par exemple, le rapport de volumes entre les deux composants (C1 et C2) conditionne l'efficacité de l'indicateur. En effet, plus le volume du composant constitué de corps gras (C1) est important, moins l'indicateur de choc est sensible. Cela se justifie par l'accroissement de l'épaisseur du composant constitué de corps gras (C1) et donc de la barrière opposée au déplacement du composant constitué d'eau (C2). (Voir FIG 7).

Selon un mode de réalisation différent de l'invention, le contenant étanche perforant (CT) reçoit par exemple trois composants (C1, C2 et C3) dont l'un est constitué d'eau additionnée d'additifs divers (C2), le deuxième est constitué d'un corps gras tel que de l'huile (C1) et le troisième est constitué d'un composant chimique en granulés ou poudre régissant par effet exothermique au contact avec l'humidité (C3). (par exemple Oxyde de calcium). L'élément sensible (ES) de l'invention est lui-même constitué d'un papier thermique dont l'aspect extérieur se modifie sous l'effet d'une élévation de température. On connaît un tel papier utilisé par exemple dans l'appareil de transmission fax.
Dans ce mode de réalisation de l'invention, par leur densité respective, les composants (C1, C2 et C3) sont maintenus dans le contenant étanche perforant (CT) selon l'ordre suivant :
- Le composant constitué d'eau (C2) est placé au plus bas et vers la pointe (1) du contenant (CT),
- Le composant constitué d'un corps gras (C1) est placé au-dessus du composant humide (C2).
- Le composant chimique a effet exothermique (C3) est placé au-dessus du composant constitué de corps gras (C1).
Ainsi, le composant constitué de corps gras (C1) fait office de barrière entre le composant humide (C2) et le composant chimique à effet exothermique (C3).
Lors d'un choc appliqué au colis équipé de l'indicateur de choc de l'invention, la brusque décélération provoquée par l'impact, bouleverse la stabilité des trois composants (C1, C2 et C3) et le composant constitué d'eau (C2) entre en contact direct partiel ou total avec le composant chimique (C3) situé sous l'élément sensible (ES) de l'invention. Mis en contact avec le composant humide (C2), le composant chimique (C3) génère par effet exothermique une légère augmentation de la température à l'intérieur du contenant étanche perforant (CT), entraînant le changement d'aspect immédiat et définitif de l'élément sensible (ES).
Comme dans le mode de réalisation précédent de l'invention, le diamètre intérieur du contenant étanche perforant (CT), son état de surface et notamment sa rugosité sont déterminés en relation étroite avec le volume exact et la composition précise de chacun des composants (C1, C2 et C3) constituant le contenu (CU). En effet, ce sont ces éléments qui déterminent avec précision le réglage de l'indicateur selon les résultats espérés. (Voir FIG 8).

Selon le mode de réalisation préféré de l'invention, le fonctionnement de l'indicateur de choc objet du présent brevet est fondamentalement basé sur le déplacement et/ou le mélange de plusieurs composants constituant le contenus (CU) à l'intérieur du contenant étanche perforant (CT), ce déplacement ou ce mélange générant la transformation définitive de l'aspect d'un élément sensible (ES).
De nombreuses applications peuvent être conçues à partir de la présente invention dans le respect de cette définition.

## Revendications

1. Indicateur de choc subi par un colis, perforant et à usage unique **caractérisé en ce qu'**il est composé de trois éléments indépendants et coopérant entre eux :
- Un contenant étanche perforant (CT) disposant d'une extrémité (1) agencée pour faciliter son introduction par perforation de la paroi du colis, et d'un aménagement interdisant le retrait de l'indicateur de choc, sans dégradation du colis sur lequel il peut être appliqué par perforation
- Un contenu (CU) constitué de plusieurs composants associés
- Un élément sensible (ES) au mélange or aux déplacements desdits composants sous l'effet d'une accélération provoquée par un choc appliqué au colis.

2. Indicateur de choc, perforant et à usage unique selon la revendication 1 **caractérisé en ce que** son contenant étanche perforant (CT) dispose d'une part d'une extrémité conique (1) pour faciliter son introduction par perforation de la paroi du colis auquel il est associé et d'autre part, à son extrémité opposée à l'extrémité conique (1), d'une collerette (2) à laquelle est associé de manière intégré dans son épaisseur ou rapporté sur son épaisseur, un élément sensible (ES) faisant office de bouchon obturateur de l'accès (6) du contenant (CT) et susceptible d'être activé par l'effet direct ou indirect du mélange ou déplacement des composants constituant le contenu (CU).

3. Indicateur de choc, perforant et à usage unique selon l'une quelconque des revendications précédentes, **caractérisé en ce que** l'élément sensible (ES) associé au contenant étanche perforant (CT), change d'aspect visuel lorsqu'il est soumis à un changement de température ou un dégagement gazeux consécutif au mélange ou déplacement des composants du contenu (CU), sous "effet d'une décélération provoquée par un choc appliqué au colis auquel l'indicateur de choc de l'invention est appliqué.

4. Indicateur de choc, perforant et à usage unique selon l'une quelconque des revendications précédentes, **caractérisé en ce que** l'élément sensible (ES) associé au contenant étanche perforant (CT), change d'aspect visuel lorsqu'il est mis en contact direct avec un des composants du contenu (CU), consécutivement au mélange ou déplacement des composants du contenu (CU) sous l'effet d'une décélération provoquée par un choc appliqué au colis auquel l'indicateur de choc de l'invention est appliqué.

5. Indicateur de choc, perforant et à usage unique selon l'une quelconque des revendications précédentes, **caractérisé en ce que** le changement d'aspect visuel de l'élément sensible (ES) associé au contenant étanche perforant (CT) est définitif et en conséquence rend l'indicateur de choc de l'invention non réutilisable.

6. Indicateur de choc, perforant et à usage unique selon l'une quelconque des revendications précédentes, **caractérisé en ce que** le contenant étanche perforant (CT) est muni d'un ou plusieurs moyens mécaniques d'interdire le retrait de l'indicateur de choc de l'invention, du colis dans lequel il a été introduit par perforation, par exemple un ou des ergots (4) ou encore une ou des rampes hélicoïdales (5).

7. Indicateur de choc, perforant et à usage unique selon l'une quelconque des revendications précédentes, **caractérisé en ce que** l'élément sensible (ES) associé à la collerette (2) du contenant étanche perforant (CT) est protégé de toute intervention ou altération extérieure au moyen d'un élément rapporté transparent ou translucide (3), par exemple un film en matière plastique.

## Patentansprüche

1. Perforierender Einweg-Stoßindikator für Pakete, **dadurch gekennzeichnet, dass** er aus drei voneinander unabhängigen Elementen besteht, die zusammenwirken:
- aus einem perforierenden dichten Behälter (CT), der über ein Ende (1) verfügt, das angeordnet ist, um das Einführen durch Perforieren der Paketwand zu erleichtern, und über eine Einrichtung, die die Abnahme des Stoßindikators ohne Schädigung des Pakets unterbindet, auf dem er mittels Perforierung angebracht werden kann,
- aus einem Inhalt (CU), der aus mehreren verknüpften Komponenten besteht,
- aus einem Element (ES), das auf die Mischung oder die Bewegungen der Komponenten unter Einwirkung einer Beschleunigung empfindlich reagiert, die durch einen Stoß verursacht wird, der auf das Paket ausgeübt wird.

2. Perforierender Einweg-Stoßindikator nach Anspruch 1, **dadurch gekennzeichnet, dass** sein perforierender dichter Behälter (CT) einerseits über ein konisches Ende (1) verfügt, um sein Einführen durch Perforieren der Wand des Paketes zu erleichtern, dem es zugeordnet ist, und andererseits an seinem dem konischen Ende (1) gegenüberliegenden Ende über einen Flansch (2), dem in integrierter Form innerhalb seiner Wanddicke oder auf die Wanddicke aufgesetzt ein empfindlich reagierendes Element (ES) zugeordnet ist, das als Verschluss zum Verhindern des Zugriffs (6) auf den Behälter (CT) dient, und das imstande ist, durch direkte oder indirekte Einwirkung der Mischung oder Bewegung der Komponenten, die den Inhalt (CU) bilden, aktiviert zu werden.

3. Perforierender Einweg-Stoßindikator nach irgendeinem der vorherigen Ansprüche, **dadurch gekennzeichnet, dass** das dem perforierenden dichten Behälter (CT) zugeordnete empfindlich reagierende Element (ES) sein optisches Erscheinungsbild ändert, wenn es einer Temperaturänderung oder einer Gasfreisetzung infolge der Mischung oder Bewegung der Komponenten des Inhalts (CU) unter Einwirkung einer Verzögerung ausgesetzt wird, die durch einen Stoß verursacht wird, der auf das Paket ausgeübt wird, an dem der Stoßindikator der Erfindung angebracht wird.

4. Perforierender Einweg-Stoßindikator nach irgendeinem der vorherigen Ansprüche, **dadurch gekennzeichnet, dass** das dem perforierenden dichten Behälter (CT) zugeordnete empfindlich reagierende Element (ES) sein optisches Erscheinungsbild ändert, wenn es infolge der Mischung oder Bewegung der Komponenten des Inhalts (CU) unter Einwirkung einer Verzögerung zu einer direkten Berührung mit einem der Komponenten des Inhalts (CU) kommt, die durch einen Stoß verursacht wird, der auf das Paket ausgeübt wird, an dem der Stoßindikator der Erfindung angebracht wird.

5. Perforierender Einweg-Stoßindikator nach irgendeinem der vorherigen Ansprüche, **dadurch gekennzeichnet, dass** die Änderung des optischen Erscheinungsbildes des dem perforierenden dichten Behälter (CT) zugeordneten empfindlich reagierenden Elements (ES) definitiv ist, und den Stoßindikator der Erfindung daher nicht wiederverwendbar macht.

6. Perforierender Einweg-Stoßindikator nach irgendeinem der vorherigen Ansprüche, **dadurch gekennzeichnet, dass** der perforierende dichte Behälter (CT) mit einem oder mehreren mechanischen Mitteln zum Unterbinden der Abnahme des Stoßindikators der Erfindung vom Paket ausgestattet ist, in das es mittels Perforierung, beispielsweise durch eine oder mehrere Klauen (4) oder aber eine oder mehrere Spiralrampen (5) eingeführt worden ist.

7. Perforierender Einweg-Stoßindikator nach irgendeinem der vorherigen Ansprüche, **dadurch gekennzeichnet, dass** das dem Flansch (2) zugeordnete empfindlich reagierende Element (ES) des perforierenden dichten Behälters (CT) vor jedem Eingriff oder jeder Veränderung von außen durch ein durchsichtiges oder durchscheinendes beigebrachtes Element (3), wie beispielsweise eine Kunststofffolie geschützt wird.

## Claims

1. Perforating single-use indicator of impacts suffered by a package, **characterised in that** it is composed of three independent elements cooperating with each other:
- a perforating sealed container (CT) having one end (1) arranged to facilitate its introduction by perforation of the wall of the package, and an arrangement preventing the withdrawal of the impact indicator without any damage to the package to which it may be applied by perforation,
- a content (CU) formed of several associated components,
- a sensitive element (ES) to the mixing or movements of said components under the effect of an acceleration caused by an impact applied to the package.

2. Perforating single-use impact indicator according to claim 1, **characterised in that** its perforating sealed container (CT) has on the one hand a tapered end (1) in order to facilitate its introduction by perforation of the wall of the package with which it is associated and on the other hand, at its end opposite the tapered end (1), a collar (2) to which is attached so as to be integrated into its thickness or added onto its thickness, a sensitive element (ES) operating as a plug closing off the access (6) to the container (CT) and able to be activated by the direct or indirect effect of the mixing or moving of the components forming the content (CU).

3. Perforating single-use impact indicator according to either of the preceding claims, **characterised in that** the sensitive element (ES) associated with the perforating sealed container (CT), changes visual appearance when it is subjected to a change in temperature or a gas release subsequent to the mixing or moving of the components of the content (CU), under the effect of a deceleration caused by an impact applied to the package to which the impact indicator of the invention is applied.

4. Perforating single-use impact indicator according to any of the preceding claims, **characterised in that** the sensitive element (ES) associated with the perforating sealed container (CT) changes visual appearance when it is placed in direct contact with one of the components of the content (CU), subsequent to the mixing or the moving of the components of the content (CU) under the effect of a deceleration caused by an impact applied to the package to which the impact indicator of the invention is applied.

5. Perforating single-use impact indicator according to any of the preceding claims, **characterised in that** the change in visual appearance of the sensitive element (ES) associated with the perforating sealed container (CT) is definitive and consequently renders the impact indicator of the invention non-reusable.

6. Perforating single-use impact indicator according to any of the preceding claims, **characterised in that** the perforating sealed container (CT) is provided with one or more mechanical means for preventing the withdrawal of the impact indicator of the invention from the package wherein it has been introduced by perforation, for example a tab or tabs (4) or a helicoidal ramp or ramps (5).

7. Perforating single-use impact indicator according to any of the preceding claims, **characterised in that** the sensitive element (ES) associated with the collar (2) of the perforating sealed container (CT) is protected from any external intervention or alteration by means of an added transparent or translucent element (3), for example a film made of plastics material.
